# EUROPÄISCHE PATENTSCHRIFT

(11) **EP 4 469 854 B1**
(45) Veröffentlichungstag und Bekanntmachung des Hinweises auf die Patenterteilung: **30.09.2026**
(21) Anmeldenummer: 23701053.3
(22) Anmeldetag: 17.01.2023
(51) Int. Cl.: G02B 27/01, B32B 17/10, C03C 17/36, G02B 5/08

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP DISPLAY (HUD) WITH P-POLARIZED IRRADIATION
DISPOSITIF DE PROJECTION POUR UN AFFICHAGE TÊTE HAUTE (HUD) À RAYONNEMENT POLARISÉ EN P

(30) Priorität: 25.01.2022 EP 22153109
(43) Veröffentlichungstag der Anmeldung: 04.12.2024
(73) Patentinhaber: Saint-Gobain Sekurit France, 60150 Thourotte (FR)
(72) Erfinder: GUIMARD, Denis, 52134 Herzogenrath (DE); HIVET, Romain, 52134 Herzogenrath (DE); HAGEN, Jan, 52134 Herzogenrath (DE); NGHIEM, Bernard, 52134 Herzogenrath (DE)
(74) Vertreter: Gebauer, Dieter Edmund
(86) Internationale Anmeldenummer: PCT/EP2023/050958
(87) Internationale Veröffentlichungsnummer: WO 2023/143959

(56) Entgegenhaltungen:
- WO-A1-2021/004685
- WO-A1-2021/105959
- CN-A- 106 054 487
- CN-A- 113 677 520
- US-A1- 2021 204 366
- US-A1- 2021 316 533

## Beschreibung

Die Erfindung betrifft eine Projektionsanordnung für ein Head-Up-Display und ihre Verwendung.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (56,5° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, so dass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf. Die DE102014220189A1 offenbart eine solche HUD-Projektionsanordnung, welche mit p-polarisierter Strahlung betrieben wird. Als reflektierende Struktur wird unter anderem eine einzelne metallische Schicht vorgeschlagen mit einer Dicke von 5 nm bis 9 nm, beispielsweise aus Silber oder Aluminium. Weitere HUD-Projektionsanordnung mit reflektierenden Beschichtungen gegenüber p-polarisierter Strahlung, die eine einzelne metallische Schicht aufweisen, sind beispielsweise aus WO2021/004685A1und WO2021/104800A1 bekannt.

Die Beschichtungen mit einer einzelnen metallischen Schicht können gute reflektierende Eigenschaften gegenüber der p-polarisierten Strahlung des Projektors aufweisen. Häufig soll die Beschichtung jedoch auch reflektierende Eigenschaften gegenüber der infraroten Sonnenstrahlung aufweisen, um die Erwärmung des Innenraums zu vermeiden. Die diesbezügliche Wirksamkeit von Beschichtungen mit einer einzelnen metallischen Schicht, insbesondere Silberschicht, ist jedoch sehr eingeschränkt. Eine Verbesserung wäre grundsätzlich durch die Wahl einer sehr dicken metallischen Schicht möglich. Der Gestaltungsfreiheit sind in dieser Hinsicht aber enge Grenzen gesetzt, weil die metallische Schicht auch die Transmission im sichtbaren Spektralbereich herabsetzt, an die bei Windschutzscheiben hohe Anforderungen gestellt werden.

Es sind auch Beschichtungen mit mehreren metallischen Schichten vorgeschlagen worden, die durch dielektrische Schichten voneinander getrennt sind. Beispielhaft sein auf WO2019046157A1, WO2019179683A1, WO2020094422A1, WO2020094423A1 verwiesen. Durch solche Beschichtungen sind bessere IR-reflektierende Eigenschaften bei einer vergleichsweise hohen Transmission im sichtbaren Spektralbereich möglich. Die Abscheidung solcher komplexeren Beschichtungen mit einer Vielzahl von Einzelschichten ist jedoch technisch aufwändig. Gleichzeitig weisen diese Beschichtungen mit mehreren metallischen Schichten schlechtere Reflexionseigenschaften gegenüber p-polarisierter Strahlung auf als Beschichtungen mit einer einzigen metallischen Schicht.

Die Gestaltung der Beschichtung kann auch nicht rein unter Berücksichtigung der IR-Reflexion und der Transmission im sichtbaren Spektralbereich erfolgen. Der Einsatz als reflektierende Beschichtung für die Strahlung eines HUD-Projektors stellt weitere Anforderungen an die Beschichtung, insbesondere einen hohen Reflexionsgrad gegenüber p-polarisierter Strahlung im sichtbaren Spektralbereich und ein möglichst glattes Reflexionsspektrum, das heißt einen möglichst konstanten Reflexionsgrad, um eine möglichst farbneutrale Darstellung der HUD-Projektion zu ermöglichen. US2017242247A1 offenbart beispielsweise eine weitere HUD-Projektionsanordnung mit einer Reflexionsbeschichtung für p-polarisierte Strahlung, die mehrere leitfähige Silberschichten enthalten kann, darüber hinaus dielektrische Schichten. Das Reflexionsspektrum weist im relevanten Spektralbereich aber eine deutlich gekrümmte Form auf, so dass der Reflexionsgrad relativ stark wellenlängenabhängig ist.

In CN 113677520 A wird eine Verbundscheibe beschrieben, die eine Sonnenschutzbeschichtung umfassend drei Silberschichten und vier dielektrische Module aufweist, wobei die dielektrischen Module zwischen den Silberschichten sowie als äußere Schichten angebracht sind.

US 2021/0316533 A1 offenbart eine Projektionsanordnung umfassend eine Verbundscheibe mit elektrisch leitfähiger Beschichtung, die drei elektrisch leitfähige Schichten umgeben von dielektrischen Schichten enthält, wobei die elektrisch leitfähigen Schichten eine Dicke von jeweils 5 nm bis 10 nm aufweisen.

In US 2021/0204366 A1 wird eine Scheibe beschrieben, die eine elektrisch leitfähige Beschichtung aufweist, wobei diese elektrisch leitfähige Beschichtung eine transparente leitfähige Oxidschicht und eine dielektrische Schicht zur Regulierung der Sauerstoffdiffusion umfasst.

CN 106054487 A ist gerichtet auf ein Verfahren zur Herstellung eines elektrochromen Fensters, wobei das Verfahren die Bildung einer elektrochromen Metalloxidschicht, einer ionenleitenden Schicht und einer Gegenelektrodenschicht auf dem Substrat umfasst, wodurch eine oxidische leitende Schicht gebildet wird, in der die ionenleitende Schicht als Stapel von separaten Schichten der Gegenelektrodenschicht oxidiert wird.

WO 2021/105959 A1 offenbart eine Fahrzeugverglasung mit einer Sonnenschutzbeschichtung, die einen Schichtstapel umfassend eine ITO-Schicht aufweist, wobei eine dünne Absorptionsschicht aus einer Metalllegierung oder einem teilweise oxidierten Metall auf einer Seite der ITO-Schicht angebracht ist.

WO 2021/004685 A1 offenbart eine Projektionsanordnung für ein Head-Up-Display umfassend einen HUD-Projektor und eine Windschutzscheibe mit Reflexionsbeschichtung, wobei die Reflexionsbeschichtung genau eine elektrisch leitfähige Schicht und auch oberhalb oder unterhalb der Reflexionsbeschichtung keine weiteren elektrisch leitfähigen Schichten umfasst.

Es besteht Bedarf an weiter verbesserten Projektionsanordnungen für p-polarisierte HUDs mit Reflexionsbeschichtungen. Die Beschichtung soll eine hohe Transmission im sichtbaren Spektralbereich und einen hohen Reflexionsgrad gegenüber infraroten Anteile der Sonnenstrahlung gewährleisten sowie einen hohen und möglichst konstanten Reflexionsgrad gegenüber der p-polarisierten Strahlung des HUD-Projektors im sichtbaren Spektralbereich aufweisen. Der vorliegenden Erfindung liegt die Aufgabe zugrunde, eine solche verbesserte Projektionsanordnung bereitzustellen.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Die erfindungsgemäße Projektionsanordnung für ein Head-Up-Display (HUD) umfasst mindestens eine Verbundscheibe, die mit einer Reflexionsbeschichtung versehen ist, und einen Projektor (HUD-Projektor). Wie bei HUDs üblich bestrahlt der Projektor einen Bereich der Verbundscheibe, wo die Strahlung in Richtung des Betrachters (Fahrers) reflektiert wird, wodurch ein virtuelles Bild erzeugt wird, welches der Betrachter von ihm aus gesehen hinter der Verbundscheibe wahrnimmt. Der durch den Projektor bestrahlbare Bereich der Verbundscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Verbundscheibe umfasst eine Außenscheibe und eine Innenscheibe, die über eine thermoplastische Zwischenschicht miteinander verbunden sind. Die Verbundscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Verbundscheibe bezeichnet. Mit Außenscheibe wird die der äußeren Umgebung zugewandte Scheibe bezeichnet.

Die erfindungsgemäße Verbundscheibe ist bevorzugt eine Windschutzscheibe (Frontscheibe) eines Fahrzeugs zu Lande, im Wasser oder in der Luft, insbesondere die Windschutzscheibe eines Kraftfahrzeugs, beispielsweise eines Personen- oder Lastkraftwagens, oder die Frontscheibe eines Flugzeugs, Schiffs oder Schienenfahrzeugs, insbesondere Zugs. HUDs, bei denen die Projektorstrahlung an einer Windschutzscheibe reflektiert wird, um ein für den Fahrer (Betrachter) wahrnehmbares Bild zu erzeugen, sind besonders gebräuchlich. Prinzipiell ist es aber auch denkbar, die HUD-Projektion an andere Scheiben, insbesondere Fahrzeugscheiben zu projizieren, beispielsweise an eine Seitenscheibe oder Heckscheibe. Durch das HUD einer Seitenscheibe können beispielsweise Personen oder andere Fahrzeuge markiert werden, mit denen eine Kollision droht, sofern deren Position durch Kameras oder andere Sensoren festgestellt wird. Ein HUD einer Heckscheibe kann bei Rückwärtsfahrt Informationen für den Fahrer liefern.

Die Verbundscheibe weist eine Oberkante und eine Unterkante auf sowie zwei dazwischen verlaufende Seitenkanten. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Im Falle einer Windschutzscheibe wird die Oberkante häufig auch als Dachkante und die Unterkante als Motorkante bezeichnet.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Der Projektor ist auf den HUD-Bereich der Verbundscheibe gerichtet. Die Strahlung des Projektors ist zumindest teilweise, bevorzugt überwiegend, besonders bevorzugt im Wesentlichen vollständig p-polarisiert. Die Reflexionsbeschichtung ist geeignet, p-polarisierte Strahlung zu reflektieren. Dadurch wird aus der Projektorstrahlung ein virtuelles Bild erzeugt, welches der Fahrer des Fahrzeugs von ihm aus gesehen hinter der Verbundscheibe wahrnehmen kann.

Die Reflexionsbeschichtung ist eine Dünnschicht-Beschichtung, also eine Schichtenfolge dünner Einzelschichten, die auch als Dünnschichtstapel bezeichnet werden kann. Die Reflexionsbeschichtung umfasst genau eine elektrisch leitfähige Schicht auf Basis von Silber (im Folgenden auch als Silberschicht bezeichnet) und zwei Schichtmodule. Die Schichtmodule und die elektrisch leitfähige Schichte sind alternierend angeordnet, so dass die elektrisch leitfähige Schicht zwischen den beiden Schichtmodulen angeordnet ist. Die Reflexionsbeschichtung weist also von unten nach oben den Aufbau "Schichtmodul - elektrisch leitfähige Schicht - Schichtmodul" auf, wobei oberhalb oder unterhalb weitere Schichten folgen können, jedoch keine elektrisch leitfähige Schicht auf Basis von Silber.

Mit Schichtmodul wird eine einzelne Schicht oder eine Mehrzahl von Schichten bezeichnet, die zusätzlich zu der genau einen Silberschicht vorhanden sind, und dieser benachbart angeordnet sind. Erfindungsgemäß ist die Silberschicht zwischen zwei Schichtmodulen angeordnet. Das Schichtmodul, das die dem HUD-Projektor nächstliegende Schicht der Reflektionsbeschichtung darstellt, wird dabei als erstes Schichtmodul bezeichnet, während das Schichtmodul, das auf der dem HUD-Projektor abgewandten Oberfläche der Silberschicht angebracht ist, als zweites Schichtmodul bezeichnet wird. Beschichtungen umfassend Silberschichten zwischen dielektrischen Schichtmodulen sind grundsätzlich bekannt, wobei nach herkömmlicher Weise die Schichtmodule ausschließlich dielektrische Schichten oder Schichtenfolgen umfassen. Im Gegensatz dazu umfasst erfindungsgemäß zumindest das erste dielektrische Schichtmodul eine Schicht auf Basis eines transparenten elektrisch leitfähigen Oxids (TCO, transparent conductive oxide), die auch als TCO-Schicht bezeichnet wird.

Das erste und das zweite Schichtmodule dienen dem Korrosionsschutz der Silberschicht und haben Einfluss auf die optischen Eigenschaften der Reflexionsbeschichtung. Bislang schien die Ansicht vorzuherrschen, dass diese Schichtmodule ausschließlich als dielektrische Schichten oder Schichtenfolgen ausgebildet sein müssen. Die Erfinder haben erkannt, dass die gezielte Einführung einer TCO-Schicht in das erste Schichtmodul vorteilhaft ist um den Energieeintrag in den Fahrzeuginnenraum zu mindern. TCO-Schichten verfügen über reflektierende Eigenschaften im infraroten Spektralbereich (IR-Bereich) und sind im sichtbaren Bereich des Lichtspektrums weitestgehend transparent. Dadurch wird der gewünschte verminderte Energieeintrag erzielt, ohne dass die Lichttransmission wesentlich herabgesetzt wird. Die transmissionsmindernde Wirkung ist insbesondere geringer als diejenige der Silberschichten. Außerdem ermöglicht der erfindungsgemäße Schichtaufbau Reflexionsbeschichtungen mit hohem und vergleichsweise konstantem Reflexionsvermögen gegenüber p-polarisierter Strahlung im sichtbaren Spektralbereich, wodurch eine intensive und farbneutrale HUD-Projektion realisierbar ist. Das sind große Vorteile der vorliegenden Erfindung.

In einer bevorzugten Ausführungsform weist die Schicht des transparenten elektrisch leitfähigen Oxids bei einer Wellenlänge von 550 nm einen Brechungsindex von 1,6 bis 2,0, bevorzugt von 1,7 bis 1,9, besonders bevorzugt 1,7 bis 1,8, auf. Die Erfinder haben festgestellt, dass TCO-Schichten mit derartigen Brechungsindices besonders geeignet sind um eine Reflexionsbeschichtung mit guten Reflektionseigenschaften gegenüber p-polarisierter Strahlung und guten infrarotreflektierenden Eigenschaften zu erzielen.

Zumindest innerhalb des ersten Schichtmoduls ist erfindungsgemäß zumindest eine TCO-Schicht, bevorzugt genau eine TCO-Schicht, enthalten. In einer besonders bevorzugten Ausgestaltung ist das TCO Indium-Zinn-Oxid (ITO, indium tin oxide). ITO weist besonders gute IR-reflektierende Eigenschaften auf und lässt sich gut abscheiden, insbesondere mittels Kathodenzerstäubung. Außerdem zeigt ITO vorteilhafte Wechselwirkungen mit Silberschichten. So lassen sich Silberschichten mit hoher Qualität auf ITO-Schichten abscheiden aufgrund einer sehr ähnlichen Kristallstruktur. Als weitere im Rahmen der Erfindung geeignete transparente leitfähige Oxide können auch Indium-Zink-Mischoxid (IZO), fluordotiertes Zinnoxid (FTO, SnO2:F), aluminiumdotiertes Zinkoxid (AZO, ZnO:Al), galliumdotiertes Zinkoxid (GZO, ZnO:Ga), antimondotiertes Zinnoxid (ATO, SnO2:Sb) und/oder niobdotiertes Titanoxid (TiO2:Nb) eingesetzt werden.

Die TCO-Schicht ist bevorzugt unterstöchiometrisch ausgebildet, weist also einen unterstöchiometrischen Sauerstoffgehalt auf. Sauerstoff wird dann beispielsweise während einer Temperaturbehandlung von den unterstöchiometrischen TCO-Schichten aufgenommen und kann nicht mit der Silberschicht reagieren.

In einer bevorzugten Ausführungsform der Projektionsanordnung ist die mindestens eine TCO-Schicht eine ITO-Schicht, die mittels physikalischer Gasphasenabscheidung mit einem Sauerstoffanteil von 0 % Volumenanteil bis 5 % Volumenanteil, bevorzugt mit einem Sauerstoffanteil von unter 1 % Volumenanteil, im Prozessgas abgeschieden ist. Die Erfinder haben festgestellt, dass erfindungsgemäße Reflektionsbeschichtungen mit einer unter diesen Bedingungen abgeschiedenen ITO-Schicht eine verbesserte IR-Reflektion aufweisen und dadurch die Wärmetransmission durch die Verbundscheibe weiter vermindert wird.

Bevorzugt umfasst die Reflektionsbeschichtung unmittelbar benachbart zur TCO-Schicht mindestens eine dielektrische Barriereschicht, die die Diffusion von Sauerstoff hemmt. Auf diese Weise wird die Reaktion der TCO-Schicht mit Sauerstoff vermieden. Eine derartige Barriereschicht ist besonders vorteilhaft, wenn die TCO-Schicht in Nachbarschaft zu einer Glasoberfläche vorgesehen ist. Wird eine Glasscheibe, auf der die Reflektionsbeschichtung aufgebracht ist, einem thermischen Biegeprozess oder Vorspannprozess unterzogen, so setzt die Glasscheibe Sauerstoff frei, der in gewissem Maße zu einer Oxidation der TCO-Schicht führen kann. Eine Barriereschicht zwischen TCO-Schicht und Glasscheibe vermindert dabei die Diffusion von Sauerstoff aus dem Glas in die TCO-Schicht, so dass die Oxidation der TCO-Schicht verhindert wird. Die Barriereschichten zur Verminderung der Sauerstoffdiffusion sind dielektrische Schichten. Als besonders geeignet haben sich Nitridschichten und/oder Oxidschichten, bevorzugt Si₃N₄, SiO₂ und/oder SiON, erwiesen.

Zumindest das erste Schichtmodul umfasst mindestens eine TCO-Schicht und dielektrische Schichten oder Schichtenfolgen. In einer bevorzugten Ausführungsform umfasst das zweite Schichtmodul keine TCO-Schicht und ausschließlich dielektrische Schichten oder Schichtenfolgen. Dielektrische Schichten können in der Regel kostengünstig abgeschieden werden und weisen vorteilhafte Eigenschaften auf, beispielsweise eine Barrierewirkung gegen die Diffusion von Alkaliionen. Darüber hinaus hat sich eine Reflektionsbeschichtung mit mindestens einer TCO-Schicht und dielektrischen Schichten oder Schichtenfolgen innerhalb des ersten Schichtmoduls und ohne TCO-Schicht innerhalb des zweiten Schichtmoduls aus dielektrischen Schichten oder Schichtenfolgen als besonders vorteilhaft erwiesen hinsichtlich guter Reflektionseigenschaften für p-polarisiertes Licht. Dies ist entscheidend für die Verwendung der Verbundscheibe mit Reflektionsbeschichtung als HUD-Projektionsfläche. In einer weiteren bevorzugten Ausführungsform enthalten sowohl das erste Schichtmodul als auch das zweite Schichtmodul jeweils dielektrische Schichten oder Schichtenfolgen und jeweils mindestens eine TCO-Schicht. Dadurch wird der Energieeintrag durch die Scheibe weiter verringert im Vergleich zu einer Scheibe ohne diese zusätzliche TCO-Schicht im zweiten Schichtmodul. Die Erfinder konnten allerdings feststellen, dass die Reflektionseigenschaften der Verbundscheibe für p-polarisiertes Licht mit jeweils einer TCO-Schicht im ersten und zweiten Schichtmodul etwas verringert sind. Insofern ist die TCO-Schicht innerhalb des zweiten Schichtmoduls optional, wobei im konkreten Anwendungsfall zu entscheiden ist, ob eine Verminderung der Reflektionseigenschaften für p-polarisiertes Licht zugunsten eines geringeren Energieeintrags akzeptabel sind. Da bereits mit nur einer TCO-Schicht innerhalb des ersten Schichtmoduls eine vorteilhafte Verminderung des Energieeintrags auf ein akzeptables Maß erreicht wird, wird besonders bevorzugt auf TCO-Schichten innerhalb des zweiten Schichtmoduls verzichtet.

Gemäß dem erfinderischen Gedanken umfasst das erste Schichtmodul zumindest eine TCO-Schicht und darüber hinaus die dielektrischen Schichten, welche herkömmlich die Schichtmodule bilden. Das erste Schichtmodul enthält die TCO-Schicht somit zusätzlich zu den dielektrischen Schichten. Das erste Schichtmodul ist das Schichtmodul der Reflektionsbeschichtung, das dem HUD-Projektor der Projektionsanordnung nächstliegend angeordnet ist. Dabei wird der Abstand zwischen einem Schichtmodul und dem HUD-Projektor entlang der Flächennormale der Reflektionsbeschichtung bestimmt, wobei definitionsgemäß das Schichtmodul, das einen geringeren Abstand zum HUD-Projektor aufweist, das erste Schichtmodul ist und das Schichtmodul mit einem größeren Abstand zum HUD-Projektor als zweites Schichtmodul bezeichnet wird. Der HUD-Projektor ist im Einbauzustand der erfindungsgemäßen Projektionsanordnung in einem Fahrzeug innerhalb des Fahrzeuginnenraums angeordnet. Demnach bildet das erste Schichtmodul die dem Fahrzeuginnenraum nächstliegende Schicht der Reflexionsbeschichtung.

Erfindungsgemäß ist mindestens eine TCO-Schicht innerhalb des ersten Schichtmoduls angebracht. Bevorzugt befindet sich genau eine TCO-Schicht innerhalb des ersten Schichtmoduls. Diese TCO-Schicht kann innerhalb des ersten Schichtmoduls sämtliche der möglichen Positionen unterhalb, oberhalb oder zwischen den dielektrischen Schichten des ersten Schichtmoduls einnehmen. Besonders bevorzugt stellt die TCO-Schicht innerhalb des ersten Schichtmoduls die dem Fahrzeuginnenraum und dem HUD-Projektor nächstliegende Schicht der Reflexionsbeschichtung dar. Dies ist vorteilhaft hinsichtlich einer verbesserten Reflektivität der Beschichtung für p-polarisiertes Licht. Grenzt die TCO-Schicht als dem Fahrzeuginnenraum nächstliegende Schicht unmittelbar an eine Glasscheibe, so wird bevorzugt zwischen der Glasscheibe und der TCO-Schicht die bereits beschriebene Barriereschicht zur Minderung der Sauerstoffdiffusion eingebracht, die einen unmittelbaren Kontakt zwischen Glasscheibe und TCO-Schicht verhindert.

Ferner kann die Position der TCO-Schicht innerhalb des Schichtstapels der Reflexionsbeschichtung einen vorteilhaften Einfluss auf die Silberschicht der Beschichtung aufweisen. Eine TCO-Schicht unterhalb der Silberschicht bietet den Vorteil, dass Silberschichten besonders gute Schichteigenschaften ausbildet, wenn sie auf TCO-Schichten abgeschieden sind aufgrund einer ähnlichen Kristallstruktur. Eine TCO-Schicht oberhalb der Silberschicht bietet den Vorteil, dass ihr Oxidationsgrad gut eingestellt werden kann, der wiederum Einfluss ausübt auf ihre Barrierewirkung gegenüber Sauerstoff und damit auf die Oxidation der Silberschicht, insbesondere während einer Temperaturbehandlung. So kann insbesondere durch eine unterstöchiometrische TCO-Schicht die Korrosion des Silbers verhindern, weil der dazu nötige Sauerstoff von der mit Sauerstoffmangel behafteten TCO-Schicht aufgenommen wird. Ein dielektrisches Schichtmodul unterhalb der Silberschicht hat darüber hinaus den Vorteil, dass es die Diffusion von Alkaliionen aus dem Glas in die Silberschicht wirksamer verhindern kann als ein TCO-Schichtmodul.

Die Reflexionsbeschichtung umfasst genau eine einzelne Silberschicht und zwei Schichtmodule, nämlich je ein Schichtmodul oberhalb und unterhalb der Silberschicht. Die Reflexionsbeschichtung enthält dabei also nicht mehr als eine Silberschicht, und auch oberhalb oder unterhalb der Reflexionsbeschichtung sind keine weiteren Silberschichten angeordnet. Es ist ein besonderer Vorteil der Erfindung, dass die erforderlichen Eigenschaften mit einem einfachen Aufbau mit nur einer Silberschicht erreicht werden kann. Dadurch wird die Abscheidung der Beschichtung vergleichsweise technisch einfach und kostengünstig gestaltet und die einzelne Silberschicht setzt die Lichttransmission nicht übermäßig herab. Die Reflexionsbeschichtung weist den folgenden grundsätzlichen Schichtaufbau auf ausgehend vom Substrat, auf dem sie abgeschieden ist ("von unten nach oben"):
- Schichtmodul
- elektrisch leitfähige Schicht auf Basis von Silber
- Schichtmodul

Je nach Position des Substrates erfolgt die Benennung der Schichtmodule als erstes Schichtmodul, das einen geringeren Abstand zum Fahrzeuginnenraum besitzt, und als zweites Schichtmodul, das einen größeren Abstand zum Fahrzeuginnenraum aufweist.

Die Reflexionsbeschichtung ist bevorzugt auf einer der der Zwischenschicht zugewandten Oberflächen der beiden Scheiben, also der innenraumseitigen Oberfläche der Außenscheibe oder der außenseitigen Oberfläche der Innenscheibe, aufgebracht. Alternativ kann die Reflexionsbeschichtung auch innerhalb der thermoplastischen Zwischenschicht angeordnet sein, beispielsweise aufgebracht auf einer Trägerfolie, die zwischen zwei thermoplastischen Verbindefolien angeordnet ist. Die Reihenfolge, in der die Schichten der Reflexionsbeschichtung auf dem darunterliegenden Substrat aufgebracht sind, ist somit abhängig von der Funktion des Substrats als Außenscheibe, Innenscheibe oder die Zwischenschicht. Ist die Reflexionsbeschichtung auf der außenseitigen Oberfläche der Innenscheibe angebracht, so ist das erste Schichtmodul auf dieser Oberfläche abgeschieden, gefolgt von der darüber liegenden Silberschicht und dem zweiten Schichtmodul als Abschluss des Schichtstapels. Eine auf der innenraumseitigen Oberfläche der Außenscheibe aufgebrachte Reflexionsbeschichtung ist hingegen so aufgebracht, dass das zweite Schichtmodul auf dieser Scheibenoberfläche abgeschieden ist, darauf die Silberschicht folgt und der Schichtstapel mit dem ersten Schichtmodul abschließt. Auf diese Weise ist, unabhängig von der Position der Reflexionsbeschichtung sichergestellt, dass das erste Schichtmodul mit darin enthaltener TCO-Schicht das zum Fahrzeuginnenraum nächstliegende Schichtmodul der Reflexionsbeschichtung bildet. Besonders bevorzugt ist die Reflexionsbeschichtung auf der außenseitigen Oberfläche der Innenscheibe aufgebracht. Dies ist vorteilhaft hinsichtlich einer möglichst hohen HUD-Bildqualität.

Bevorzugt besteht die Reflexionsbeschichtung aus der Silberschicht, dem ersten Schichtmodul und dem zweiten Schichtmodul und weist keine weiteren Schichten auf. Eine Ausnahme hiervon bilden die bereits beschriebenen Barriereschichten zur Verminderung der Sauerstoffdiffusion, sowie sehr dünne Blockerschichten mit einer Dicke von weniger als 1 nm, die optional zwischen der Silberschicht und den benachbarten Schichtmodulen vorhanden sein können. Die Blockerschichten weisen Metalle, Metalloxide und/oder Metallnitride auf. Die Reflexionsbeschichtung weist also bevorzugt außer der Silberschicht, den Schichtmodulen und den optional vorhandenen Barriereschichten keine weiteren Schichten mit einer Dicke von mehr als 1 nm auf. Anders ausgedrückt besteht die Reflexionsbeschichtung bevorzugt aus den Silberschichten und den Schichtmodulen sowie optionalen Barriereschichten und optionalen Blockerschichten.

Die Angabe von Schichtdicken oder Dicken beziehen sich, sofern nicht anders angegeben, auf die geometrische Dicke einer Schicht.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Die elektrisch leitfähige Schicht ist auf Basis von Silber ausgebildet. Die elektrisch leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Palladium, Gold, Kupfer oder Aluminium. Die Dicke der Silberschicht beträgt bevorzugt mindestens 9 nm, besonders bevorzugt mindestens 12 nm. Die Dicke der Silberschicht beträgt bevorzugt höchstens 25 nm. In diesem Bereich für die Dicke können besonders vorteilhafte Eigenschaften der Reflexionsbeschichtung erreicht werden. Die Silberschicht ist einerseits dick genug, um signifikante IR-reflektierende Eigenschaften aufzuweisen, um eine Beheizung der Scheibe zu ermöglichen und nicht zu Entnetzungsproblemen bei einer Temperaturbehandlung zu führen. Als Entnetzung wird dabei eine inselartige Akkumulation des Silbers statt einer homogenen Schicht bezeichnet, was bei sehr dünnen Silberschichten auftreten kann. Die Silberschicht ist andererseits dünn genug, um eine hohe Lichttransmission zu gewährleisten. Die gewünschten reflektierenden Eigenschaften gegenüber p-polarisierter Strahlung können in diesem Bereich für die Dicke der Silberschicht ebenfalls vorteilhaft realisiert werden.

Die Dicke der mindestens einen TCO-Schicht beträgt bevorzugt 20 nm bis 150 nm, bevorzugt von 60 nm bis 100 nm. Damit werden gute Ergebnisse erzielt im Hinblick auf die IRreflektierenden Eigenschaften und die reflektierenden Eigenschaften gegenüber der p-polarisierten Strahlung des HUD-Projektors. Die TCO-Schicht ist insbesondere dünn genug, um die Lichttransmission nicht in kritischem Maße herabzusetzen, andererseits dick genug, um die Silberschicht wirksam vor Korrosion zu schützen. Weist die Reflexionsbeschichtung mehrere TCO-Schichten auf, so gelten die vorstehenden bevorzugten Bereiche für jede der TCO-Schichten.

In einer vorteilhaften Ausgestaltung umfasst die Reflexionsbeschichtung mindestens eine Blockerschicht auf Basis eines Metalls, einer Metalllegierung und/oder einer ganz oder teilweise oxidierten und/oder nitrierten Schicht aus Basis eines Metalls. Die Blockerschicht steht bevorzugt mit der Silberschicht in direktem Kontakt. Bevorzugt ist die Blockerschicht dabei oberhalb der Silberschicht angeordnet. Die Blockerschicht ist dann zwischen der Silberschicht und dem darüber liegenden Schichtmodul angeordnet und dient dem Oxidationsschutz der Silberschicht insbesondere bei Temperaturbehandlungen der beschichteten Scheibe, wie sie typischerweise im Rahmen von Biegeprozessen vorkommen. Alternativ oder zusätzlich kann auch eine Blockerschicht unterhalb der Silberschicht vorhanden sein. Die Blockerschicht ist dann zwischen der Silberschicht und dem darunter liegenden Schichtmodul angeordnet. Ein solche Blockerschicht unterhalb der Silberschicht verbessert die Adhäsion der Silberschicht. Die Blockerschicht weist bevorzugt eine Dicke von weniger als 1 nm auf, besonders bevorzugt von 0,1 nm bis 0,5 nm. Die Blockerschicht kann beispielsweise auf Basis von Nickel (Ni), Chrom (Cr), Niob (Nb), Titan (Ti) oder Mischungen oder Legierungen davon ausgebildet sein. Die Blockerschicht ist bevorzugt auf Basis von Titan oder einer Nickel-Chrom-Legierung ausgebildet. Die Blockerschicht kann ganz oder teilweise oxidiert oder nitriert sein.

Die optische Dicke der dielektrischen Schichtmodule beträgt bevorzugt von 30 nm bis 150 nm, besonders bevorzugt von 60 nm bis 120 nm, ganz besonders bevorzugt von 70 nm bis 100 nm. Damit werden besonders vorteilhafte optische Eigenschaften der Reflexionsbeschichtung erreicht. Die dielektrischen Schichten weisen hinsichtlich der Silberschicht eine entspiegelnde Wirkung auf, so dass die Lichttransmission erhöht wird, und beeinflussen das Reflexionsspektrum gegenüber der Strahlung des HUD-Projektors. Im genannten Bereich für die optische Dicke wird eine vorteilhafte Lichttransmission erreicht sowie eine ausgeprägte und gleichmäßige (farbneutrale) Reflexion gegenüber der Strahlung des HUD-Projektors Die optische Dicke ist das Produkt aus der geometrischen Dicke und dem Brechungsindex (bei 550 nm). Die optische Dicke einer Schichtenfolge berechnet sich als Summe der optischen Dicken der Einzelschichten.

Die dielektrischen Schichtmodule können als dielektrische Einzelschichten oder als dielektrische Schichtenfolgen ausgebildet sein. Die dielektrischen Schichten können beispielsweise auf Basis von Siliziumoxid, Siliziumnitrid, Zinkoxid, Zinnoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein.

In einer vorteilhaften Ausgestaltung umfasst die Reflexionsbeschichtung keine dielektrischen Schichten, deren Brechungsindex weniger als 1,9 beträgt. Alle dielektrischen Schichten der Reflexionsbeschichtung weisen also einen Brechungsindex von mindestens 1,9 auf. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die erfindungsgemäße Reflexionsbeschichtung so schnell und kostengünstig herstellen.

Brechungsindizes sind im Rahmen der vorliegenden Erfindung grundsätzlich bezogen auf eine Wellenlänge von 550 nm angegeben. Der Brechungsindex kann beispielsweise mittels Ellipsometrie bestimmt werden. Ellipsometer sind kommerziell erhältlich, beispielsweise von der Firma Sentech.

Bevorzugt umfassen das erste Schichtmodul und das zweite Schichtmodul eine oder mehrere der nachfolgenden Schichten:
- eine Entspiegelungsschicht mit einem Brechungsindex von mindestens 1,9,
- eine brechungsindexsteigernde Schicht mit einem Brechungsindex von mindestens 2,1,
- eine Anpassungsschicht.

In einer vorteilhaften Ausgestaltung umfassen das erste Schichtmodul und/oder das zweite Schichtmodul eine dielektrische Schicht, die als Entspiegelungsschicht bezeichnet werden kann und bevorzugt auf Basis eines Oxids, beispielsweise Zinnoxid, und/oder eines Nitrids, beispielsweise Siliziumnitrid, besonders bevorzugt auf Basis von Siliziumnitrid. Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor. Ist die dielektrische Schichtenfolge innerhalb des obersten Schichtmoduls oberhalb der Silberschicht, so ist die Entspiegelungsschicht im Falle einer Schichtenfolge bevorzugt die oberste Schicht der Schichtenfolge. In anderen Fällen (dielektrisches Schichtmodul als unterstes Schichtmodul) ist die Entspiegelungsschicht im Falle einer Schichtenfolge bevorzugt die unterste Schicht der Schichtenfolge. Neben den vorteilhaften optischen Eigenschaften weisen solche Entspiegelungsschichten, insbesondere auf Basis von Siliziumnitrid, eine gute Barrierewirkung auf gegen die Diffusion von Ionen (beispielsweise Alkaliionen aus den Glasscheiben), so dass die Entspiegelungsschicht die funktionale Silberschicht chemisch schützt. Ist die unterste Schicht eines unteren Schichtmoduls, also die Schicht, die in direktem Kontakt mit dem Substrat steht, eine TCO-Schicht, so kann auf die Entspiegelungsschicht verzichtet werden. Sofern es sich bei dem Substrat um Glas handelt, so ist bevorzugt zwischen der TCO-Schicht und der Glasoberfläche eine Barriereschicht zur Verminderung der Sauerstoffdiffusion eingebracht.

Neben der Entspiegelungsschicht können optional weitere dielektrische Schichten vorhanden sein, bevorzugt solche mit einem Brechungsindex von mindestens 1,9. In einer besonders vorteilhaften Ausgestaltung umfassen das erste Schichtmodul und/oder das zweite Schichtmodul eine dielektrische Anpassungsschicht, welche die Reflektivität der Silberschicht verbessert. Die Anpassungsschicht ist bevorzugt auf Basis von Zinkoxid ausgebildet, besonders bevorzugt Zinkoxid ZnO_{1-δ} mit 0 ≤ δ ≤ 0,01. Die Anpassungsschicht enthält weiter bevorzugt Dotierungen. Die Anpassungsschicht kann beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschicht ist bevorzugt angeordnet zwischen der Silberschicht und der Entspiegelungsschicht. Die Anpassungsschicht ist vorteilhaft im Hinblick auf die Kristallstruktur der darüberliegenden Silberschicht. Außerdem kann sie die Silberschicht vor Korrosion schützen, insbesondere, wenn sie unterstöchiometrisch abgeschieden ist und folglich in der Lage ist, überschüssigen Sauerstoff aufzunehmen und an der Reaktion mit der Silberschicht zu hindern.

Die dielektrische Schichtenfolge kann auch eine brechungsindexsteigernde Schicht umfassen, die einen höheren Brechungsindex aufweist als die Entspiegelungsschicht. Dadurch können die optischen Eigenschaften weiter verbessert und feineingestellt werden, insbesondere die Reflexionseigenschaften. Die brechungsindexsteigernde Schicht bewirkt insbesondere eine bessere Entspiegelung der Silberschicht, so dass die Lichttransmission erhöht wird. Die brechungsindexsteigernde Schicht weist bevorzugt einen Brechungsindex von mindestens 2,1 auf. Die brechungsindexsteigernde Schicht ist bevorzugt auf Basis eines Silizium-Metall-Mischnitrids wie Silizium-Zirkonium-Mischnitrid, Silizium-Titan-Mischnitrid oder Silizium-Hafnium-Mischnitrid, besonders bevorzugt Silizium-Zirkonium-Mischnitrid. Der Anteil an Zirkonium beträgt dabei bevorzugt zwischen 15 und 45 Gew.-%, besonders bevorzugt zwischen 15 und 30 Gew.-%. Als alternative Materialien kommen beispielsweise Wolframoxid (WO₃), Nioboxid (Nb₂O₅), Wismutoxid (Bi₂O₃), Titanoxid (TiO₂) und/oder Aluminiumnitrid (AIN) in Betracht. Die brechungsindexsteigernde Schicht sind bevorzugt zwischen der Entspiegelungsschicht und der Silberschichtung angeordnet beziehungsweise zwischen der Anpassungsschicht (soweit vorhanden) und der Entspiegelungsschicht.

Die Dicke der Anpassungsschicht, soweit eine solche vorhanden ist, beträgt bevorzugt von 5 nm bis 20 nm, besonders bevorzugt von 8 nm bis 12 nm. Die Dicke der brechungsindexsteigernden Schicht beträgt bevorzugt von 5 nm bis 20 nm, besonders bevorzugt von 8 nm bis 12 nm. Die Dicke der Entspiegelungsschicht wird bevorzugt so gewählt, dass insgesamt eine optische Dicke der gesamten Schichtenfolge in den vorstehend genannten bevorzugten Bereichen erreicht wird. Sind neben der Entspiegelungsschicht sowohl eine Anpassungsschicht als auch eine brechungsindexsteigende Schicht vorhanden, so beträgt die Dicke der Entspiegelungsschicht besonders bevorzugt von von 10 nm bis 40 nm.

In einer bevorzugten Ausgestaltung weist das zweite Schichtmodul eine dielektrische Schichtenfolge auf, die außer der besagten Entspiegelungsschicht, der optionalen brechungsindexsteigernden Schicht und der optionalen Anpassungsschicht keine weiteren Schichten aufweist. Sofern das zweite Schichtmodul keine TCO-Schichten umfasst, besteht es aus den besagten Schichten. Das erste Schichtmodul weist bevorzugt eine dielektrische Schichtenfolge auf, die mindestens eine der Schichten aus der Gruppe Entspiegelungsschicht, brechungsindexsteigernde Schicht und Anpassungsschicht enthält und außer der Entspiegelungsschicht, der brechungsindexsteigernden Schicht und der Anpassungsschicht keine weiteren Schichten aufweist. Das erste Schichtmodul weist darüber hinaus bevorzugt genau eine TCO-Schicht und optional eine Barriereschicht auf, so dass das erste Schichtmodul bevorzugt aus der dielektrischen Schichtenfolge, der TCO-Schicht und optional einer Barriereschicht besteht.

Die in der vorliegenden Beschreibung genannten Materialien können stöchiometrisch, unterstöchiometrisch ober überstöchiometrisch abgeschieden sein. Die Materialien können Dotierungen aufweisen, insbesondere Aluminium, Bor, Zirkonium oder Titan. Durch die Dotierungen können an sich dielektrische Materialien mit einer gewissen elektrischen Leitfähigkeit versehen werden. Der Fachmann wird sie hinsichtlich Ihrer Funktion dennoch als dielektrische Schichten identifizieren, wie es im Bereich der dünnen Schichten üblich ist. Das Material der dielektrischen Schichten weist bevorzugt eine elektrische Leitfähigkeit (Kehrwert des spezifischen Widerstands) von kleiner 10⁻⁴ S/m auf. Das Material der elektrisch leitfähigen Schichten (insbesondere TCO-Schichten, Silberschicht) weist bevorzugt eine elektrische Leitfähigkeit von größer 10⁴ S/m auf.

In einer möglichen Ausführungsform umfassen das erste Schichtmodul und/oder das zweite Schichtmodul genau eine dielektrische Schicht, bevorzugt eine Entspiegelungsschicht mit einem Brechungsindex von mindestens 1,9, besonders bevorzugt auf Basis von Siliziumnitrid. Die Dicke der Entspiegelungsschicht beträgt dabei bevorzugt von 25 nm bis 75 nm, besonders bevorzugt von 30 nm bis 60 nm, ganz besonders bevorzugt von 35 nm bis 50 nm.

In einer weiteren Ausgestaltung der Erfindung umfassen das erste Schichtmodul und/oder das zweite Schichtmodul genau zwei dielektrische Schichten, bevorzugt eine Entspiegelungsschicht und eine Anpassungsschicht mit einem Brechungsindex von jeweils mindestens 1,9. Die Entspiegelungsschicht ist besonders bevorzugt auf Basis von Siliziumnitrid ausgebildet, die Anpassungsschicht auf Basis von Zinkoxid. Die Dicke der Anpassungsschicht beträgt besonders bevorzugt von 5 nm bis 20 nm, insbesondere von 8 nm bis 12 nm. Die Dicke der Entspiegelungsschicht wird bevorzugt so gewählt, dass das dielektrische Schichtmodul insgesamt eine optische Dicke von 50 nm bis 150 nm aufweist, besonders bevorzugt von 60 nm bis 120 nm, ganz besonders bevorzugt von 70 nm bis 100 nm. Die Anpassungsschicht ist bevorzugt zwischen der Entspiegelungsschicht und der Silberschicht angeordnet. Im bevorzugten Falle einer einzigen TCO-Schicht im ersten Schichtmodul ergeben sich als besonders bevorzugte Schichtenfolgen ausgehend vom Substrat ("von unten nach oben"):
- TCO-Schicht - Entspiegelungsschicht - Anpassungsschicht - Silberschicht - Anpassungsschicht - Entspiegelungsschicht, für eine Reflexionsbeschichtung auf der außenseitigen Oberfläche der Innenscheibe
- Entspiegelungsschicht - Anpassungsschicht - Silberschicht - Anpassungsschicht - Entspiegelungsschicht - TCO-Schicht, für eine Reflexionsbeschichtung auf der innenraumseitigen Oberfläche der Außenscheibe

Auf die Entspiegelungsschicht benachbart der TCO-Schicht kann auch verzichtet werden, wobei optional eine Barriereschicht auf der der Anpassungsschicht abgewandten Oberfläche der TCO-Schicht vorgesehen wird.

In einer weiteren Ausgestaltung der Erfindung umfassen das erste Schichtmodul und/oder das zweite Schichtmodul genau drei dielektrische Schichten, bevorzugt eine Entspiegelungsschicht mit einem Brechungsindex von mindestens 1,9, eine brechungsindexsteigernde Schicht mit einem Brechungsindex von mindestens 2,1 und eine Anpassungsschicht mit einem Brechungsindex von mindestens 1,9. Die Entspiegelungsschicht ist besonders bevorzugt auf Basis von Siliziumnitrid ausgebildet, die brechungsindexsteigernde Schicht auf Basis eines Silizium-Metall-Mischnitrids (wie Silizium-Zirkonium-Mischnitrid, Silizium-Titan-Mischnitrid oder Silizium-Hafnium-Mischnitrid), die Anpassungsschicht auf Basis von Zinkoxid. Die Dicke der Anpassungsschicht und der brechungsindexsteigernden Schicht beträgt besonders bevorzugt jeweils von 5 nm bis 20 nm, insbesondere von 8 nm bis 12 nm. Die Dicke der Entspiegelungsschicht wird bevorzugt so gewählt, dass das dielektrische Schichtmodul insgesamt eine optische Dicke von 50 nm bis 150 nm aufweist, besonders bevorzugt von 60 nm bis 120 nm, ganz besonders bevorzugt von 70 nm bis 100 nm. Sie beträgt ganz besonders bevorzugt von 10 nm bis 40nm. Die Anpassungsschicht weist bevorzugt den geringsten Abstand zur benachbarten Silberschicht auf, während die brechungsindexsteigernde Schicht zwischen der Anpassungsschicht und der Entspiegelungsschicht angeordnet ist. Im bevorzugten Falle einer einzelnen TCO-Schicht innerhalb des ersten Schichtmoduls ergeben sich als besonders bevorzugte Schichtenfolgen ausgehend vom Substrat ("von unten nach oben"):
- Entspiegelungsschicht - brechungsindexsteigernde Schicht - Anpassungsschicht - Silberschicht - Anpassungsschicht - brechungsindexsteigernde Schicht - Entspiegelungsschicht - TCO-Schicht, für eine Reflexionsbeschichtung auf der innenraumseitigen Oberfläche der Außenscheibe
- TCO-Schicht - Entspiegelungsschicht - brechungsindexsteigernde Schicht - Anpassungsschicht - Silberschicht - Anpassungsschicht - brechungsindexsteigernde Schicht - Entspiegelungsschicht, für eine Reflexionsbeschichtung auf der außenseitigen Oberfläche der Innenscheibe

Auf die Entspiegelungsschicht benachbart der TCO-Schicht kann auch verzichtet werden, wobei optional eine Barriereschicht auf der der Anpassungsschicht abgewandten Oberfläche der TCO-Schicht vorgesehen wird.

In den drei vorstehend beschriebenen Ausgestaltungen bestehen die Schichtenfolgen bevorzugt ausschließlich aus den genannten Schichten, wobei zusätzlich optional zwischen der Silberschicht und dem darüberliegenden und/oder dem darunterliegenden Schichtmodul eine Blockerschicht mit einer Dicke von weniger als 1 nm vorhanden ist. Die Blockerschicht ist bevorzugt direkt oberhalb der Silberschicht angeordnet, wo sie besonders effektiv ist. Es kann jeweils optional eine zusätzliche Blockerschicht direkt unterhalb der Silberschicht angeordnet sein.

Mit der erfindungsgemäßen Beschichtung können vorteilhafte reflektierende Eigenschaften gegenüber p-polarisierter Strahlung realisiert werden, so dass eine intensitätsstarke HUD-Projektion ermöglicht wird. Die integrierte Lichtreflexion der Verbundscheibe gegenüber p-polarisierter Strahlung, gemessen mit einer p-polarisierten Lichtquelle der Lichtart A bei einem Einfallswinkel von 65° und einem Beobachtungswinkel von 65°, jeweils zur innenraumseitigen Flächennormalen, beträgt bevorzugt mindestens 10%, besonders bevorzugt mindestens 15%, ganz besonders bevorzugt mindestens 20%. Die innenraumseitige Flächennormale ist die Flächennormale der innenraumseitigen Oberfläche der Innenscheibe. Die Lichtreflexion kann daher auch als innenraumseitige Lichtreflexion bezeichnet werden. Der Einfallswinkle von 65° entspricht der Bestrahlung mit üblichen HUD-Projektoren. Die Lichtreflexion wird an einem Punkt innerhalb des HUD-Bereichs gemessen, bevorzugt im geometrischen Zentrum des HUD-Bereichs.

Um eine möglichst farbneutrale Darstellung der HUD-Projektion zu erreichen, sollte das Reflexionsspektrum im sichtbaren Spektralbereich möglichst gleichmäßig sein. Dies ist insbesondere dann der Fall, wenn die Reflexionsfarbe im La*b*-Farbraum einen a*-Wert und einen b*-Wert aufweisen, deren Betrag kleiner 5 ist. Auch hier wird die Reflexionsfarbe gemessen mit einer p-polarisierten Lichtquelle der Lichtart A bei einem Einfallswinkel von 65° und einem Beobachtungswinkel von 65°, jeweils zur innenraumseitigen Flächennormalen.

Außerdem wird durch die erfindungsgemäße Beschichtung aufgrund der zusätzlich zur Silberschicht vorhandenen TCO-Schicht der Wärmeeintrag in das Fahrzeuginnere wirksam reduziert, was einen Hauptvorteil der vorliegenden Erfindung gegenüber dem Stand der Technik darstellt. Die insgesamt eingestrahlte Sonnenenergie, ausgedrückt als TTS-Wert gemäß ISO 13837, beträgt bevorzugt höchstens 55%.

Die Reflexionsbeschichtung ist transparent, was im Sinne der Erfindung bedeutet, dass sie eine mittlere Transmission im sichtbaren Spektralbereich von mindestens 70 %, bevorzugt mindestens 75 % aufweist und dadurch die Durchsicht durch die Scheibe nicht wesentlich einschränkt. Für die HUD-Projektion ist es grundsätzlich ausreichend, wenn der HUD-Bereich der Verbundscheibe mit der Reflexionsbeschichtung versehen ist. Da die Reflexionsbeschichtung aber auch den Energieeintrag in den Fahrzeuginnenraum reduzieren soll, ist die Verbundscheibe bevorzugt großflächig mit der Reflexionsbeschichtung versehen. In einer vorteilhaften Ausgestaltung der Erfindung sind mindestens 80% der Scheibenoberfläche mit der erfindungsgemäßen Reflexionsbeschichtung versehen. Insbesondere ist die Reflexionsbeschichtung vollflächig auf die Scheibenoberfläche aufgebracht mit Ausnahme eines umlaufenden Randbereichs und optional lokaler Bereiche, die als Kommunikations-, Sensor- oder Kamerafenster die Transmission von elektromagnetischer Strahlung durch die Verbundscheibe gewährleisten sollen und daher nicht mit der Reflexionsbeschichtung versehen sind. Der umlaufende unbeschichtete Randbereich weist beispielsweise eine Breite von bis zu 20 cm auf. Er verhindert den direkten Kontakt der Reflexionsbeschichtung zur umgebenden Atmosphäre, so dass die Reflexionsbeschichtung im Innern der Verbundscheibe vor Korrosion und Beschädigung geschützt ist.

Der Projektor ist innenraumseitig der Verbundscheibe angeordnet und bestrahlt die Verbundscheibe über die innenraumseitige Oberfläche der Innenscheibe. Er ist auf den HUD-Bereich gerichtet und bestrahlt diesen zur Erzeugung der HUD-Projektion. Die Strahlung des Projektors ist erfindungsgemäß zumindest teilweise p-polarisiert, weist also einen p-polarisierten Strahlungsanteil auf. Die Strahlung des Projektors ist bevorzugt überwiegend p-polarisiert, weist also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Verbundscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe an einem Punkt innerhalb des HUD-Bereichs, bevorzugt im geometrischen Zentrum des HUD-Bereichs aufgespannt. Aufgrund der im Fahrzeugbereich üblichen Scheibenkrümmung, die sich auf die Einfallsebene und damit auf die Definition der Polarisation auswirkt, kann an anderen Stellen das Verhältnis von p-polarisierter Strahlung zu s-polarisierter Strahlung von diesem Referenzpunkt verschieden sein.

Die vom Projektor ausgesendete p-polarisierte Strahlung bestrahlt beim Betrieb des HUDs den HUD-Bereich zur Erzeugung der HUD-Projektion. Die Strahlung des Projektors liegt im sichtbaren Spektralbereich des elektromagnetischen Spektrums - typische HUD-Projektoren arbeiten mit den Wellenlängen 473 nm, 550 nm und 630 nm (RGB). Da der für HUD-Projektionsanordnungen typische Einfallswinkel dem Brewsterwinkel für einen Luft-Glas-Übergang (56,5° bis 56,6°, Kalk-Natron-Glas, *n₂*=1,51-1,52) relativ nahekommt, wird p-polarisierte Strahlung von den Scheibenoberflächen kaum reflektiert. Geisterbilder durch Reflexion an der innenraumseitigen Oberfläche der Innenscheibe und der außenseitigen Oberfläche der Außenschiebe treten daher nur mit geringer Intensität auf. Neben der Vermeidung der Geisterbilder hat die Verwendung p-polarisierter Strahlung auch den Vorteil, dass das HUD-Bild für Träger von polarisationsselektiven Sonnenbrillen erkennbar ist, welche typischerweise nur p-polarisierte Strahlung passieren lassen und s-polarisierte Strahlung blocken.

Die Strahlung des Projektors trifft bevorzugt mit einem Einfallswinkel von 45° bis 70°, insbesondere von 60° bis 70° auf die Verbundscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Verbundscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Verbundscheibe) im geometrischen Zentrum des HUD-Bereichs. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Unter den externen Scheibenoberflächen werden dabei die voneinander abgewandten Oberflächen der Einzelscheiben bezeichnet, also die außenseitige Oberfläche der Außenscheibe und die innenraumseitige Oberfläche der Innenscheibe. Die externen Oberflächen der Verbundscheibe sind daher bevorzugt im Wesentlichen parallel zueinander angeordnet. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Verbundscheibe, ebenso wie die Innenscheibe und die Außenscheibe. Eine keilartige Zwischenschicht würde dagegen im vertikalen Verlauf zwischen Unterkante und Oberkante der Verbundscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Verbundscheibe günstiger gestaltet.

Die Reflexionsbeschichtung kann auch als beheizbare Beschichtung verwendet werden. Sie muss dazu elektrisch kontaktiert werden, damit sie mit der Spannungsquelle, üblicherweise der Bordspannung des Fahrzeugs, verbunden werden kann. Zum Anschluss an die Spannungsquelle wird die Beschichtung bevorzugt mit Stromsammelschienen *(Busbars)* versehen, welche mit den Polen der Spannungsquelle verbindbar sind, um über einen möglichst großen Teil der Scheibenbreite Strom in die Beschichtung einzuleiten. Die Stromsammelschienen können beispielsweise als aufgedruckte und eingebrannte Leiter ausgebildet sein, typischerweise in Form einer gebrannten Siebdruckpaste mit Glasfritten und Silberpartikeln. Alternativ können aber auch Streifen einer elektrisch leitfähigen Folie als Sammelleiter verwendet werden, die auf die Beschichtung aufgelegt oder aufgeklebt werden, beispielsweise Kupferfolie oder Aluminiumfolie. Typischerweise sind die beiden Sammelleiter in der Nähe zweier einander gegenüberliegender Seitenkanten der Verbundscheibe positioniert, beispielsweise der Ober- und Unterkante.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,9 mm verwendet, beispielsweise die mit den Standarddicken 1,6 mm oder 2,1 mm.

Die Außenscheibe, die Innenscheibe und die thermoplastische Zwischenschicht können klar und farblos, aber auch getönt oder gefärbt sein. Die Gesamttransmission durch die Verbundscheibe (samt Reflexionsbeschichtung) beträgt in einer bevorzugten Ausgestaltung größer 70% bezogen auf die Lichtart A, insbesondere wenn sie als Windschutzscheibe ausgebildet ist. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer vorteilhaften Ausgestaltung ist die Außenscheibe getönt oder gefärbt. Dadurch kann die außenseitige Reflekivität der Verbundscheibe verringert werden, wodurch der Eindruck der Scheibe angenehmer gestaltet wird für einen äußeren Betrachter. Um allerdings die vorgeschriebene Lichttransmission von 70% zu gewährleisten (Gesamttransmission), sollte die Außenscheibe bevorzugt eine Lichttransmission von mindestens 80% aufweisen, besonders bevorzugt von mindestens 85%, wenn die Verbundscheibe als Windschutzscheiben verwendet werden soll. Die Innenscheibe und die Zwischenschicht sind bevorzugt klar, also nicht getönt oder gefärbt. Beispielsweise kann grün oder blau gefärbtes Glas als Außenscheibe eingesetzt werden.

Die Verbundscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Verbundscheibe kann aber auch plan sein, beispielsweise wenn es als Scheibe für Busse, Züge oder Traktoren vorgesehen ist.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Zwischenschicht ist typischerweise aus mindestens einer thermoplastischen Folie ausgebildet, insbesondere aus einer Folie auf Basis von PVB, EVA oder PU. Die Folie kann außer dem Polymer weitere Zusätze enthalten, insbesondere Weichmacher. Die Dicke der Zwischenschicht beträgt bevorzugt von 0,2 mm bis 2 mm, besonders bevorzugt von 0,3 mm bis 1 mm.

Die Verbundscheibe wird kann hergestellt werden durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Die Reflexionsbeschichtung wird bevorzugt durch physikalische Gasphasenabscheidung (PVD) auf die Innenscheibe oder die Außenscheibe aufgebracht, besonders bevorzugt durch Kathodenzerstäubung ("Sputtern"), ganz besonders bevorzugt durch magnetfeldunterstütze Kathodenzerstäubung ("Magnetron-Sputtern"). Grundsätzlich kann die Beschichtung aber auch beispielsweise mittels chemischer Gasphasenabscheidung (CVD), beispielsweise plasmagestützte Gasphasenabscheidung (PECVD), durch Aufdampfen oder durch Atomlagenabscheidung *(atomic layer deposition,* ALD) aufgebracht werden. Die Beschichtung werden bevorzugt vor der Lamination auf die Scheiben aufgebracht. Statt die Reflexionsbeschichtung auf eine Scheibenoberfläche aufzubringen, kann sie grundsätzlich auch auf einer Trägerfolie bereitgestellt werden, die in der Zwischenschicht angeordnet wird.

Soll die Verbundscheibe gebogen sein, so werden die Außenscheibe und die Innenscheibe bevorzugt vor der Lamination und bevorzugt nach etwaiger Beschichtungsprozesse einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der Reflexionsbeschichtung.

Die Erfindung umfasst außerdem die Verwendung einer erfindungsgemäß ausgebildeten Verbundscheibe als Projektionsfläche einer Projektionsanordnung für ein Head-Up-Display, wobei ein Projektor auf den HUD-Bereich gerichtet ist, dessen Strahlung zumindest teilweise, insbesondere überwiegend, bevorzugt im Wesentlichen vollständig p-polarisiert ist. Die vorstehend beschriebenen bevorzugten Ausgestaltungen gelten für die Verwendung entsprechend.

Die Erfindung umfasst weiter die Verwendung einer erfindungsgemäßen Projektionsanordnung als HUD in einem Fahrzeug zu Land, zu Wasser oder in der Luft, bevorzugt einem Kraftfahrzeug, Schienenfahrzeug, Flugzeug oder Schiff, insbesondere einem Personenkraftwagen oder Lastkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Verbundscheibe einer gattungsgemäßen Projektionsanordnung,
- Fig. 2: einen Querschnitt durch eine gattungsgemäße Projektionsanordnung,
- Fig. 3: einen Querschnitt durch eine Verbundscheibe einer erfindungsgemäßen Projektionsanordnung,
- Fig. 4: einen Querschnitt durch eine Ausgestaltung der erfindungsgemäßen Reflexionsbeschichtung auf einer Innenscheibe und
- Fig. 5: ein Diagramm der Brechungsindices von ITO-Schichten in Abhängigkeit der Wellenlänge.

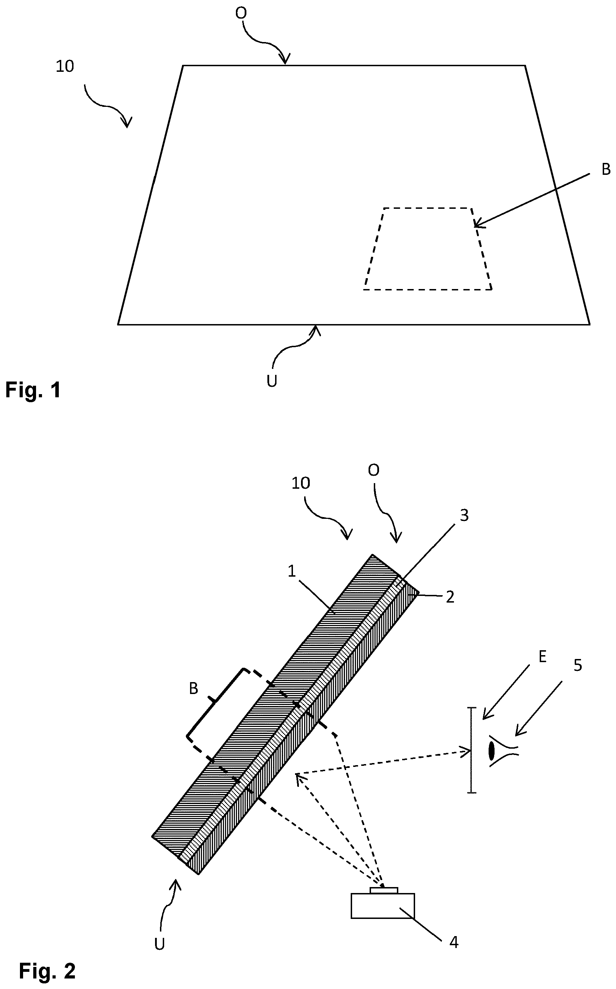

Figur 1 und Figur 2 zeigen je ein Detail einer gattungsgemäßen Projektionsanordnung für ein HUD. Die Projektionsanordnung umfasst eine Verbundscheibe 10, insbesondere die Windschutzscheibe eines Personenkraftwagens. Die Projektionsanordnung umfasst außerdem einen HUD-Projektor 4, welcher auf einen Bereich der Verbundscheibe 10 gerichtet ist. In diesem Bereich, der üblicherweise als HUD-Bereich B bezeichnet wird, können durch den HUD-Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Verbundscheibe 10 ist aufgebaut aus einer Außenscheibe 1 und einer Innenscheibe 2, die über eine thermoplastische Zwischenschicht 3 miteinander verbunden sind. Ihre Unterkante U ist nach unten in Richtung des Motors des Personenkraftwagens angeordnet, ihre Oberkante O nach oben in Richtung des Dachs. Die Außenscheibe 1 ist in Einbaulage der äußeren Umgebung zugewandt, die Innenscheibe 2 dem Fahrzeuginnenraum.

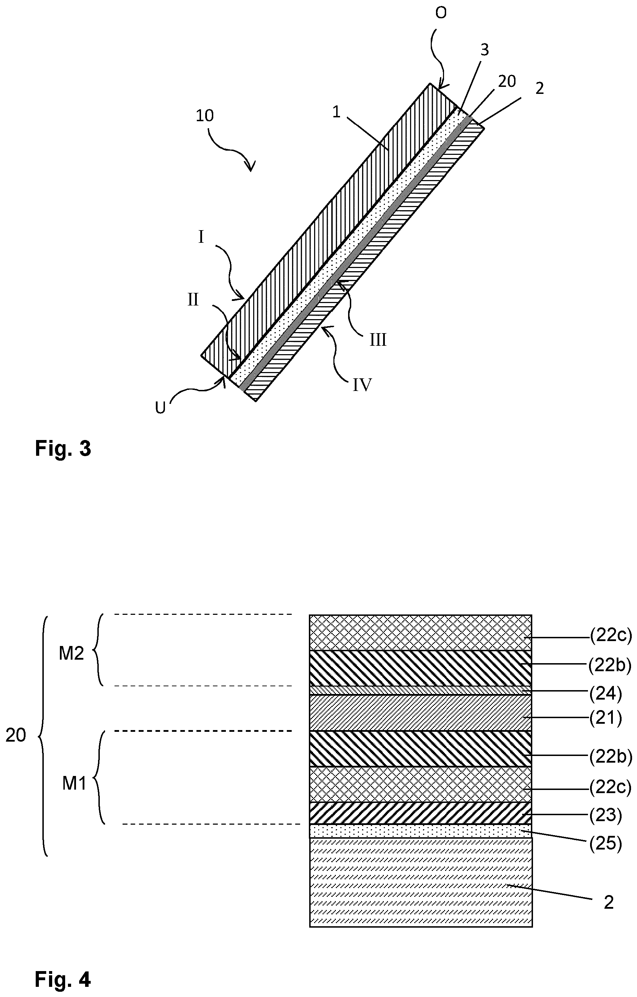

Figur 3 zeigt eine Ausgestaltung einer erfindungsgemäß ausgebildeten Verbundscheibe 10. Die Außenscheibe 1 weist eine außenseitige Oberfläche I auf, die in Einbaulage der äußeren Umgebung zugewandt ist, und eine innenraumseitige Oberfläche II, die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus Kalk-Natron-Glas und weisen beispielsweise eine Dicke von jeweils 2,1 mm auf. Die Zwischenschicht 3 ist beispielsweise aus einer PVB-Folie ausgebildet mit einer Dicke von 0,76 mm. Die PVB-Folie weist eine im Wesentlichen konstante Dicke auf, abgesehen von einer etwaigen fachüblichen Oberflächenrauigkeit - sie ist nicht als sogenannte Keilfolie ausgebildet.

Die außenseitige Oberfläche III der Innenscheibe 2 ist mit einer erfindungsgemäßen Reflexionsbeschichtung 20 versehen, die als Reflexionsfläche für die Projektorstrahlung vorgesehen ist. Die Reflexionsbeschichtung 20 soll daneben auch als Sonnenschutzbeschichtung dienen und den Energieeintrag in den Fahrzeuginnenraum, der insbesondere durch die infraroten Strahlungsanteile des Sonnenlichts verursacht wird, reduzieren.

Der Strahlung des Projektors 4 ist erfindungsgemäß p-polarisiert, insbesondere im Wesentlichen rein p-polarisiert. Da der HUD-Projektor 4 die Windschutzscheibe 10 mit einem Einfallswinkel von etwa 65° bestrahlt, der nahe dem Brewster-Winkel liegt, wird die Strahlung des Projektors nur unwesentlich an den externen Oberflächen I, IV der Verbundscheibe 10 reflektiert. Die erfindungsgemäße Reflexionsbeschichtung 20 dagegen ist auf die Reflexion p-polarisierter Strahlung optimiert. Sie dient als Reflexionsfläche für die Strahlung des HUD-Projektors 4 zur Erzeugung der HUD-Projektion.

Figur 4 zeigt die Schichtenfolge einer Ausgestaltung der erfindungsgemäßen Reflexionsbeschichtung 20 auf der Innenscheibe 2. Die Reflexionsbeschichtung 20 ist ein Stapel von Dünnschichten. Die Reflexionsbeschichtung 20 umfasst genau eine elektrisch leitfähige Schicht 21 auf Basis von Silber. Direkt oberhalb der elektrisch leitfähigen Schicht 21 ist eine Blockerschicht 24 angeordnet. Unterhalb der leitfähigen Schicht 21 ist ein erstes Schichtmodul M1 angeordnet. Oberhalb der leitfähigen Schicht 21 mit der Blockerschicht 24 ist ein zweites Schichtmodul M2 angeordnet. Unterhalb des ersten Schichtmoduls M1, zwischen erstem Schichtmodul M1 und Innenscheibe 2 ist eine Barriereschicht 25 angeordnet, die die Diffusion von Sauerstoff aus der Innenscheibe 2 in das erste Schichtmodul M1 unterbindet.

Das erste Schichtmodul M1 besteht aus einer dielektrischen Schichtenfolge und einer einzelnen Schicht 23 auf Basis eines TCO. Die Schicht 23 verbessert die IR-Reflektivität der Verbundscheibe 10, so dass der Energieeintrag in den Fahrzeuginnenraum weiter reduziert werden kann. Des Weiteren lässt sich mit der Schicht 23 eine Reflexionsbeschichtung 20 realisieren, die hervorragende Reflexionseigenschaften gegenüber der p-polarisierten Strahlung des HUD-Projektors 4 aufweist, so dass eine intensitätsstarke und farbneutrale Darstellung der HUD-Projektion gewährleistet wird. Das sind große Vorteile der erfindungsgemäßen Reflexionsbeschichtung 20 mit der TCO-Schicht 23. Die Schicht 23 ist unmittelbar auf der Barriereschicht 23 angebracht, also als unterste Schicht des ersten Schichtmoduls M1 vorgesehen, oberhalb dessen die dielektrische Schichtenfolge des ersten Schichtmoduls M1 folgt. Die dielektrische Schichtenfolge des ersten Schichtmoduls M1 besteht von unten nach oben aus einer brechungsindexsteigernden Schicht 22c und einer Anpassungsschicht 22b.

Das zweite Schichtmodul M2 ist ausgebildet als dielektrische Schichtenfolge, wobei die Schichtenfolge von unten nach oben in dieser Reihenfolge aus einer Anpassungsschicht 22b und einer brechungsindexsteigernden Schicht 22c besteht.

Die Schichtenabfolge ist schematisch der Figur zu entnehmen. Die Schichtenfolge einer Verbundscheibe 10 mit der Reflexionsbeschichtung 20 auf der außenseitigen Oberfläche III der Innenscheibe 2 ist, zusammen mit den Materialien und Schichtdicken der Einzelschichten, in Tabelle 1 dargestellt für vier erfindungsgemäße Beispiele B1 bis B5, die sich in den einzelnen Schichtdicken unterscheiden. Die dielektrischen Schichten können unabhängig voneinander dotiert sein, beispielsweise mit Bor oder Aluminium. Die als ITO-Schicht vorgesehene TCO-Schicht 23 ist mit einem Sauerstoffgehalt von ungefähr 0 % im Prozessgas mittels magnetfeldunterstützter Kathodenzerstäubung abgeschieden. Die Schichtenfolgen der Beispiele B1 bis B5 sind auf der außenseitigen Oberfläche III der Innenscheibe 2 aufgebracht. Die Innenscheibe 2 weist jeweils eine Dicke von 2,1 mm auf und ist über die außenseitige Oberfläche III, auf der sich die Reflexionsbeschichtung 20 befindet, über eine PVB-Folie mit einer Dicke von 0,76 mm an die Außenscheibe 1 mit einer Dicke von 2,1 mm angebunden. Die Innenscheibe 2 und die Außenscheibe 1 bestehen aus Kalk-Natron-Glas. In Tabelle 2 sind nicht erfindungsgemäße Vergleichsbeispiele V1 bis V4 gezeigt, wobei eine Verbundscheibe gemäß Vergleichsbeispielen den identischen Grundaufbau hat wie die erfindungsgemäßen Beispiele, sich jedoch im Aufbau der Reflexionsbeschichtung unterscheidet.

Die optische Dicke einer Schicht ergibt sich jeweils als Produkt aus der in den Tabellen dargestellten geometrischen Dicke und dem Brechungsindex (SiN: 2,0; SiZrN: 2,2, ZnO: 2,0).

**Tabelle 1**

| **Erfindungsgemäße Beispiele** | | | | | | | | |
|---|---|---|---|---|---|---|---|---|
| Material | Bezugszeichen | | | Schichtdicken in nm | | | | |
| | | | | B1 | B2 | B3 | B4 | B5 |
| SiN | | M2 | 22a | 5 | 5 | 5 | | |
| SiZr 17% | | | 22c | 31 | | | | |
| SiZr 27% | | | 22c | | 30 | | 34 | 36 |
| SnZnO | | | 22c | | | 10 | | |
| TiOₓ | | | 22b | | | 27 | 5 | 5 |
| ZnO | | | 22b | 5 | 5 | | | |
| NiCrOₓ | 20 | 24 | | 1 | 1 | | | |
| **Ag** | | **21** | | **13,8** | **15,1** | **14,6** | **15,7** | **15,4** |
| ZnO | | M1 | 22b | 5 | 5 | 5 | 5 | 5 |
| SiZrN 27% | | | 22c | | 36 | 40 | 38 | 30 |
| SiZrN 17% | | | 22c | 37 | | | | |
| SiN | | | 22a | | | | | 11 |
| ITO | | | 23 | 70 | 87 | 70 | 88 | 72 |
| SiN | | 25 | | | | | | 5 |
| Kalk-Natron-Glas | 2 | | | 2,1 mm | 2,1 mm | 2,1 mm | 2,1 mm | 2,1 mm |

Die Vergleichsbeispiele V1 bis V5 sind in Tabelle 2 dargestellt. Wie die erfindungsgemäßen Beispiele B1 bis B5 umfassen die Reflexionsbeschichtungen der Vergleichsbeispiele ebenfalls einzelne Silberschichten 21 und zwei Schichtmodule M1, M2. Beide Schichtmodule M1, M2 sind als dielektrische Schichtenfolgen ausgebildet und umfassen jeweils eine Entspiegelungsschicht 22a, eine brechungsindexsteigernde Schicht 22c und eine Anpassungsschicht 22b. Die Schichtmodule M1, M2 der Vergleichsbeispiele umfassen keine TCO-Schichten 23.

**Tabelle 2**

| **Nicht erfindungsgemäße Vergleichsbeispiele** | | | | | | | | |
|---|---|---|---|---|---|---|---|---|
| Material | Bezugszeichen | | | Schichtdicken in nm | | | | |
| | | | | V1 | V2 | V3 | V4 | V5 |
| SiN | | M2 | 22a | | 19 | 17 | | |
| SiZr 17% | | | 22c | 56 | | | | 53 |
| SiZr 27% | | | 22c | | 39 | | 51 | |
| SnZnO | | | 22c | | | 11 | | |
| TiOₓ | | | 22b | | | 7 | 5 | |
| ZnO | | | 22b | 5 | 5 | | | 5 |
| NiCrOₓ | 20 | 24 | | 1 | 1 | | | 1 |
| **Ag** | | **21** | | **11,7** | **13,0** | **12,2** | **13,4** | **13,8** |
| ZnO | | M1 | 22b | 5 | 5 | 5 | 5 | |
| SiZrN 27% | | | 22c | | 16 | | 13 | |
| SiZrN 17% | | | 22c | 3 | | 60 | | 20 |
| SiN | | | 22a | 24 | 10 | 2 | 15 | 17 |
| ITO | | | 23 | | | | | |
| SiN | | 25 | | | | | | |
| Kalk-Natron-Glas | 2 | | | 2,1 mm | 2,1 mm | 2,1 mm | 2,1 mm | 2,1 mm |

In Tabelle 3 sind einige charakterisierende Parameter der Beispiele B1 bis B5 und der Vergleichsbeispiele V1 bis V5 zusammengefasst. Verglichen werden dabei:
- TL(A): integrierte Lichttransmission nach ISO 9050, gemessen mit einer Lichtquelle der Lichtart A
- TTS: insgesamt eingestrahlte Sonnenenergie nach ISO 13837
- R(A)p-pol: integrierte Lichtreflexion gegenüber p-polarisierter Strahlung, gemessen mit einer p-polarisierten Lichtquelle der Lichtart A bei einem Einfallswinkel von 65° und einem Beobachtungswinkel von 65° zur innenraumseitigen Flächennormalen
- a*(A)p-pol, b*(A)p-pol: Farbwerte im L*a*b*-Farbraum als Reflexionsfarbe gegenüber p-polarisierter Strahlung, gemessen mit einer p-polarisierten Lichtquelle der Lichtart A bei einem Einfallswinkel von 65° und einem Beobachtungswinkel von 65° zur innenraumseitigen Flächennormalen

Die Lichttransmission TL(A) ist ein Maß für die Transparenz der Verbundscheibe 10, wobei insbesondere für Windschutzscheiben Werte größer als 70% erstrebenswert sind. Die eingestrahlte Sonnenenergie TTS ist ein Maß für den Energieeintrag in den Fahrzeuginnenraum und damit für den thermischen Komfort. R(A)p-pol ist ein Maß für das Reflexionsvermögen gegenüber der Strahlung des HUD-Projektors 4 und damit der Intensität der HUD-Projektion. Die Farbwerte im L*a*b*-Farbraum sind ein Maß dafür, wie farbneutral die HUD-Darstellung erfolgt, wobei die Werte möglichst nahe an Null liegen sollten.

**Tabelle 3**

| | TL(A) / % | TTS / % | R(A)p-pol / % | a*(A)p-pol | b*(A)p-pol |
|---|---|---|---|---|---|
| B1 | 72,5 | 53,2 | 17,1 | 0,7 | -0,6 |
| B2 | 72,5 | 52,3 | 17,9 | 0,3 | -0,1 |
| B3 | 72,5 | 53,2 | 17,3 | 0,9 | -1,3 |
| B4 | 72,5 | 52,1 | 18,7 | 0,6 | -0,4 |
| B5 | 72,5 | 52,9 | 18,5 | 0,8 | -1,0 |
| V1 | 72,5 | 59,6 | 17,3 | 1,1 | -1,0 |
| V2 | 72,5 | 58,5 | 17,7 | 1,5 | -0,1 |
| V3 | 72,5 | 59,2 | 17,1 | 1,2 | -2,2 |
| V4 | 72,5 | 58,3 | 18,6 | 1,1 | -2,0 |
| V5 | 72,5 | 56,3 | 19,4 | 2,9 | -0,7 |

Aus Tabelle 3 wird deutlich, dass sämtliche Beispiele und auch das Vergleichsbeispiel eine ausreichend hohe Lichttransmission TL(A) aufweisen, so dass die Verbundscheiben 10 als Windschutzscheiben verwendet werden können. Im Gegensatz zum Vergleichsbeispiel weisen die erfindungsgemäßen Beispiele einen signifikant geringeren Wert TTS auf - durch die TCO-Schicht 23, die im ersten Schichtmodul M1 integriert ist, wird die eingestrahlte Sonnenenergie deutlich reduziert und der thermische Komfort im Fahrzeug gesteigert. Überraschenderweise kann dennoch ein hoher und mit dem Vergleichsbeispiel vergleichbarer Reflexionsgrad gegenüber der p-polarisierten Strahlung des HUD-Projektors 4 erreicht werden, so dass die Verbundscheiben 10 als Projektionsfläche einer gattungsgemäßen HUD-Projektionsanordnung geeignet ist.

Die Einführung einer TCO-Schicht 23 aus ITO innerhalb des ersten Schichtmoduls M1 führt zu einer Verringerung der solaren Gesamttransmission TTS um ungefähr 6 %. Damit geht eine Verringerung der Energietransmission (TE) um einen ähnlichen Betrag (ungefähr 7 %) einher. Ferner steigen die äußere energetische Reflexion um ca. 3-4% und die äußere energetische Absorption um ca. 2-3%. Der Anstieg der energetischen Absorption ist auf die Absorption der ITO-Schicht im infraroten Bereich des Spektrums zurückzuführen. Die Reflexionsbeschichtungen mit ITO weisen eine größere energetische Reflexion auf, die auf eine größere Dicke der Silberschichten bei Beschichtungen umfassend eine ITO-Schicht zurückzuführen ist. Die Erfinder haben festgestellt, dass die Anwesenheit der ITO-Schicht sowie die bevorzugte Positionierung der ITO-Schicht als am weitesten innenliegende Schicht innerhalb des ersten Schichtmoduls (M1) vorteilhaft ist um auch bei vergleichsweise dicken Silberschichten eine möglichst neutrale Farbgebung zu erreichen. Dieser positive Einfluss der Schicht 23 auf die Farbgebung der Schichten wird auch anhand eines Vergleichs des Beispiels 1 mit dem Vergleichsbeispiel 5 veranschaulicht. Vergleichsbeispiel 5 und Beispiel 1 umfassen beide eine Silberschicht mit einer Dicke von 13,8 nm, wobei Vergleichsbeispiel 5 keine TCO-Schicht 23 enthält und Beispiel 1 eine ITO-Schicht als TCO-Schicht 23 enthält. Bei Vergleichsbeispiel 5 wird ein TTS-Wert von 56,3 % erreicht, bei Beispiel 1 beträgt der TTS-Wert 53,2 %. Bei Vergleichsbeispiel 5 treten unerwünscht hohe Farbwerte auf, während bei Beispiel 1 eine neutralere Farbe resultiert.

Die Verwendung von ITO-Schichten innerhalb des ersten Schichtmoduls M1 verbessert somit die IR-Absorption und erhöht die Energieabsorption, was zu einer geringeren solaren Gesamttransmission TTS führt. Des Weiteren wird die Herstellung von Reflexionsbeschichtungen mit dickeren Silberschichten unter Beibehaltung der Farbneutralität ermöglicht. Reflexionsbeschichtungen mit dickeren Silberschichten haben ihrerseits eine höhere energetische Reflexion. Die größere energetische Absorption und Reflexion der Reflexionsbeschichtungen umfassend eine ITO-Schicht in Modul M1 tragen beide zur Verbesserung der solaren Gesamttransmission (TTS) bei. Die Erfinder haben festgestellt, dass diesbezüglich ITO-Schichten als Schicht 23 besonders vorteilhaft sind, jedoch auch mittels anderer transparenter leitfähiger Oxide dieser Effekt erzielt werden kann.

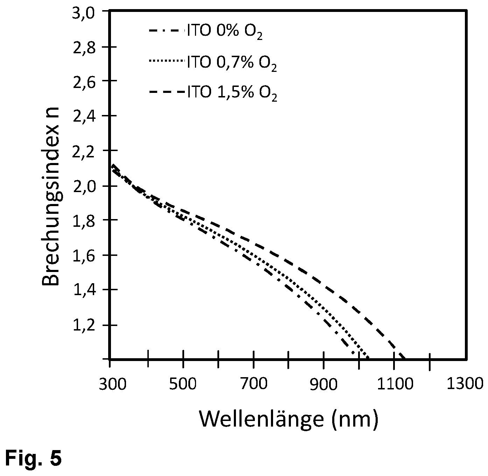

Figur 5 zeigt die Brechungsindices mehrerer TCO-Schichten 23 in Abhängigkeit von der Wellenlänge. Die TCO-Schichten 23 sind als ITO-Schichten ausgeführt, die mittels magnetfeldunterstützter Kathodenzerstäubung abgeschieden sind. Dabei wurde dem Prozessgas jeweils kein Sauerstoff (Kurve ITO 0% O₂), 0,7 % Sauerstoff (Kurve ITO 0,7% O₂) und 1,5 % Sauerstoff (Kurve ITO 1,5 % O₂) zugesetzt. Die Brechungsindices wurden jeweils mittels Ellipsometrie bestimmt. TCO-Schichten, die bei einer Wellenlänge von 550 nm einen Brechungsindex von 1,6 bis 2,0, bevorzugt von 1,7 bis 1,9, besonders bevorzugt 1,7 bis 1,8, aufweisen, haben sich als besonders vorteilhaft erwiesen. Dabei nimmt der Brechungsindex der TCO-Schichten bevorzugt kontinuierlich mit steigender Wellenlänge ab.

### Bezugszeichenliste:

- (10): Verbundscheibe

- (1): Außenscheibe
- (2): Innenscheibe
- (3): thermoplastische Zwischenschicht
- (4): HUD-Projektor
- (5): Betrachter / Fahrzeugfahrer

- (20): Reflexionsbeschichtung
- (21): elektrisch leitfähige Schicht / Silberschicht
- (22a): Entspiegelungsschicht
- (22b): Anpassungsschicht
- (22c): brechungsindexsteigernde Schicht
- (23): Schicht auf Basis eines transparenten leitfähigen Oxids (TCO)
- (24): Blockerschicht
- (25): Barriereschicht
- (M1): erstes Schichtmodul
- (M2): zweites Schichtmodul

- (O): Oberkante der Windschutzscheibe 10
- (U): Unterkante der Windschutzscheibe 10
- (B): HUD-Bereich der Windschutzscheibe 10
- (E): Eyebox

- (I): außenseitige, von der Zwischenschicht 3 abgewandte Oberfläche der Außenscheibe 1
- (II): innenraumseitige, zur Zwischenschicht 3 hingewandte Oberfläche der Außenscheibe 1
- (III): außenseitige, zur Zwischenschicht 3 hingewandte Oberfläche der Innenscheibe 2
- (IV): innenraumseitige, von der Zwischenschicht 3 abgewandte Oberfläche der Innenscheibe 2

## Patentansprüche

1. Projektionsanordnung für ein Head-Up-Display (HUD), mindestens umfassend
- eine Verbundscheibe (10), umfassend eine Außenscheibe (1) und eine Innenscheibe (2), die über eine thermoplastische Zwischenschicht (3) miteinander verbunden sind, mit einem HUD-Bereich (B); und
- einen HUD-Projektor (4), der auf den HUD-Bereich (B) gerichtet ist;
wobei
- die Strahlung des Projektors (4) zumindest teilweise p-polarisiert ist und
- die Verbundscheibe (10) mit einer Reflexionsbeschichtung (20) versehen ist, die geeignet ist, p-polarisierte Strahlung zu reflektieren;
und wobei
- die Reflexionsbeschichtung (20) genau eine elektrisch leitfähige Schicht (21) auf Basis von Silber umfasst, die flächig zwischen einem ersten Schichtmodul (M1) und einem zweiten Schichtmodul (M2) angeordnet ist,
- das erste Schichtmodul (M1) das dem HUD-Projektor (4) nächstliegende Schichtmodul der Reflexionsbeschichtung (20) ist,
- das erste Schichtmodul (M1) und das zweite Schichtmodul (M2) dielektrische Schichten oder Schichtenfolgen (22a, 22b, 22c) umfassen,
**dadurch gekennzeichnet, dass** zumindest das erste Schichtmodul (M1) zumindest eine Schicht (23) auf Basis eines transparenten leitfähigen Oxids enthält.

2. Projektionsanordnung nach Anspruch 1, wobei die Schicht (23) auf Basis eines transparenten leitfähigen Oxids Indiumzinnoxid (ITO), Indium-Zink-Mischoxid (IZO), flurdotiertes Zinnoxid (SnO₂:F), aluminiumdotiertes Zinkoxid (ZnO:Al), galliumdotiertes Zinkoxid (ZnO:Ga), antimondotiertes Zinnoxid (ATO, SnO₂:Sb) und/oder niobdotiertes Titanoxid (TiO₂:Nb) enthält.

3. Projektionsanordnung nach Anspruch 2, wobei die Schicht (23) auf Basis eines transparenten leitfähigen Oxids Indiumzinnoxid (ITO) enthält und mittels physikalischer Gasphasenabscheidung mit einem Sauerstoffanteil von 0 % Volumenanteil bis 5 % Volumenanteil, bevorzugt mit einem Sauerstoffanteil von unter 1 % Volumenanteil, im Prozessgas abgeschieden ist.

4. Projektionsanordnung nach einem der Ansprüche 1 bis 3, wobei die Reflektionsbeschichtung (20) unmittelbar benachbart der Schicht (23) auf Basis eines transparenten leitfähigen Oxids mindestens eine dielektrische Barriereschicht (25) umfasst, die die Diffusion von Sauerstoff hemmt.

5. Projektionsanordnung nach einem der Ansprüche 1 bis 4, wobei das erste Schichtmodul (M1) dielektrische Schichten oder Schichtenfolgen (22a, 22b, 22c) und eine Schicht (23) auf Basis eines transparenten leitfähigen Oxids umfasst und das zweite Schichtmodul (M2) dielektrische Schichten oder Schichtenfolgen (22a, 22b, 22c) und keine Schicht (23) auf Basis eines transparenten leitfähigen Oxids umfasst.

6. Projektionsanordnung nach einem der Ansprüche 1 bis 5, wobei zumindest das erste Schichtmodul (M1) dielektrische Schichten oder Schichtenfolgen (22a, 22b, 22c) und eine Schicht (23) auf Basis eines transparenten leitfähigen Oxids umfasst und die Schicht (23) auf Basis eines transparenten leitfähigen Oxids die dem HUD-Projektor (4) nächstliegende Schicht des ersten Schichtmoduls (M1) ist.

7. Projektionsanordnung nach einem der Ansprüche 1 bis 6, wobei die Reflexionsbeschichtung (20) auf der zur Zwischenschicht (3) hingewandten Oberfläche (II, III) der Außenscheibe (1) oder der Innenscheibe (2) oder innerhalb der Zwischenschicht (3) angeordnet ist.

8. Projektionsanordnung nach einem der Ansprüche 1 bis 7, wobei zwischen der elektrisch leitfähigen Schicht (21) und dem benachbarten Schichtmodul (M1, M2) eine Blockerschicht (24) angeordnet ist mit einer Dicke von weniger als 1 nm.

9. Projektionsanordnung nach einem der Ansprüche 1 bis 8, wobei die Dicke der elektrisch leitfähigen Schicht (21) mindestens 12 nm und höchstens 25 nm beträgt.

10. Projektionsanordnung nach einem der Ansprüche 1 bis 9, wobei die Dicke der mindestens einen Schicht (23) auf Basis des transparenten leitfähigen Oxids von 20 nm bis 150 nm, bevorzugt von 60 nm bis 100 nm, beträgt.

11. Projektionsanordnung nach einem der Ansprüche 1 bis 10, wobei die optische Dicke der dielektrischen Schichten oder Schichtenfolgen (22a, 22b, 22c) von 30 nm bis 150 nm beträgt.

12. Projektionsanordnung nach einem der Ansprüche 1 bis 11, wobei die dielektrischen Schichten oder Schichtenfolgen (22a, 22b, 22c), eine oder mehrere der nachfolgenden Schichten umfassen:
eine Entspiegelungsschicht (22a) mit einem Brechungsindex von mindestens 1,9, bevorzugt auf Basis von Siliziumnitrid,
eine brechungsindexsteigernde Schicht (22c) mit einem Brechungsindex von mindestens 2,1, bevorzugt auf Basis eines Silizium-Metall-Mischnitrids, insbesondere Silizium-Zirkonium-Mischnitrid, Silizium-Titan-Mischnitrid oder Silizium-Hafnium-Mischnitrid,
eine Anpassungsschicht (22b), bevorzugt auf Basis von Zinkoxid.

13. Projektionsanordnung nach einem der Ansprüche 1 bis 12, wobei die Verbundscheibe (10) mit der Reflexionsbeschichtung (20) eine integrierte Lichtreflexion gegenüber p-polarisierter Strahlung von mindestens 15% aufweist, gemessen mit einer p-polarisierten Lichtquelle der Lichtart A bei einem Einfallswinkel von 65° und einem Beobachtungswinkel von 65° zu einer Flächennormalen der von der Zwischenschicht (3) abgewandten Oberfläche (IV) der Innenscheibe (2).

14. Projektionsanordnung nach einem der Ansprüche 1 bis 13, wobei die Außenscheibe (1) getönt oder gefärbt ist und eine Lichttransmission von mindestens 80% aufweist.

15. Verwendung einer Projektionsanordnung nach einem der Ansprüche 1 bis 14 als HUD in einem Fahrzeug zu Land, zu Wasser oder in der Luft, bevorzugt einem Kraftfahrzeug, Schienenfahrzeug, Flugzeug oder Schiff, insbesondere einem Personenkraftwagen oder Lastkraftwagen.

## Claims

1. Projection arrangement for a head-up display (HUD), at least comprising
- a composite pane (10), comprising an outer pane (1) and an inner pane (2), which are connected to one another via a thermoplastic intermediate layer (3) and having an HUD region (B); and
- an HUD projector (4), which is directed toward the HUD region (B);
wherein
- the radiation of the projector (4) is at least partially p-polarised, and
- the composite pane (10) is provided with a reflective layer (20) which is suitable for reflecting p-polarised radiation;
and wherein
- the reflective layer (20) comprises precisely one electrically conductive layer (21) based on silver, which layer is arranged in a planar manner between a first layer module (M1) and a second layer module (M2),
- the first layer module (M1) is the layer module of the reflective layer (20) closest to the HUD projector (4),
- the first layer module (M1) and the second layer module (M2) comprise dielectric layers or layer sequences (22a, 22b, 22c),
**characterized in that**
- at least the first layer module (M1) contains at least one layer (23) based on a transparent conductive oxide.

2. The projection arrangement according to claim 1, wherein the layer (23) based on a transparent conductive oxide contains indium tin oxide (ITO), indium zinc mixed oxide (IZO), fluorine-doped tin oxide (SnO₂:F), aluminium-doped zinc oxide (ZnO:Al), gallium-doped zinc oxide (ZnO:Ga), antimony-doped tin oxide (ATO, SnO₂:Sb) and/or niobium-doped titanium oxide (TiO₂:Nb).

3. The projection arrangement according to claim 2, wherein the layer (23) on the basis of a transparent conductive oxide contains indium tin oxide (ITO) and is deposited by means of physical vapour deposition with an oxygen content of 0% volume fraction to 5% volume fraction, preferably with an oxygen content of less than 1% volume fraction in the process gas.

4. The projection arrangement according to one of claims 1 to 3, wherein the reflective layer (20) directly adjacent to the layer (23) based on a transparent conductive oxide comprises at least one dielectric barrier layer (25) that inhibits diffusion of oxygen.

5. The projection arrangement according to one of claims 1 to 4, wherein the first layer module (M1) comprises dielectric layers or layer sequences (22a, 22b, 22c) and a layer (23) based on a transparent conductive oxide, and the second layer module (M2) comprises dielectric layers or layer sequences (22a, 22b, 22c) and no layer (23) based on a transparent conductive oxide.

6. The projection arrangement according to one of claims 1 to 5, wherein at least the first layer module (M1) comprises dielectric layers or layer sequences (22a, 22b, 22c) and a layer (23) based on a transparent conductive oxide, and the layer (23) based on a transparent conductive oxide is the layer of the first layer module (M1) closest to the HUD projector (4).

7. The projection arrangement according to one of claims 1 to 6, wherein the reflective layer (20) is arranged on the surface facing the intermediate layer (3) (II, III) of the outer pane (1) or of the inner pane (2) or within the intermediate layer (3).

8. The projection arrangement according to one of claims 1 to 7, wherein a blocker layer (24) is arranged between the electrically conductive layer (21) and the adjacent layer module (M1, M2) with a thickness of less than 1 nm.

9. The projection arrangement according to one of claims 1 to 8, wherein the thickness of the electrically conductive layer (21) is at least 12 nm and at most 25 nm.

10. The projection arrangement according to one of claims 1 to 9, wherein the thickness of the at least one layer (23) based on the transparent conductive oxide is from 20 nm to 150 nm, preferably from 60 nm to 100 nm.

11. The projection arrangement according to one of claims 1 to 10, wherein the optical thickness of the dielectric layers or layer sequences (22a, 22b, 22c) is from 30 nm to 150 nm.

12. The projection arrangement according to one of claims 1 to 11, wherein the dielectric layers or layer sequences (22a, 22b, 22c) comprise one or more of the following layers:
an anti-reflective layer (22a) with a refractive index of at least 1.9, preferably based on silicon nitride,
a refractive-index-enhancing layer (22c) with a refractive index of at least 2.1, preferably based on a silicon-metal mixed nitride, in particular silicon-zirconium mixed nitride, silicon titanium mixed nitride or silicon hafnium mixed nitride,
a matching layer (22b), preferably based on zinc oxide.

13. The projection arrangement according to one of claims 1 to 12, wherein the composite pane (10) with the reflective layer (20) has an integrated light reflection with respect to p-polarised radiation of at least 15%, measured with a p-polarised light source of the light type A at an angle of incidence of 65° and a viewing angle of 65° to a surface normal of the surface (IV) facing away from the intermediate layer (3) of the inner pane (2).

14. The projection arrangement according to one of claims 1 to 13, wherein the outer pane (1) is tinted or coloured and has a light transmittance of at least 80%.

15. Use of a projection arrangement according to one of claims 1 to 14 as HUD in a vehicle on land, on water or in the air, preferably a motor vehicle, rail vehicle, aircraft, or ship, in particular a passenger car or lorry.

## Revendications

1. Dispositif de projection pour un affichage tête haute (HUD), comprenant au moins
- une vitre composite (10), comprenant une vitre extérieure (1) et une vitre intérieure (2), qui sont reliées l'une à l'autre par une couche intermédiaire thermoplastique (3) et présentant une zone HUD (B); et
- un projecteur HUD (4), qui est orienté vers la zone HUD (B);
dans lequel
- le rayonnement du projecteur (4) est au moins partiellement polarisé p, et
- la vitre composite (10) est pourvue d'une couche réfléchissante (20) apte à réfléchir un rayonnement polarisé p;
et dans lequel
- la couche réfléchissante (20) comprend exactement une couche électriquement conductrice (21) à base d'argent, laquelle couche est disposée de manière plane entre un premier module de couche (M1) et un deuxième module de couche (M2),
- le premier module de couche (M1) est le module de couche de la couche réfléchissante (20) le plus proche du projecteur HUD (4),
- le premier module de couche (M1) et le deuxième module de couche (M2) comprennent des couches diélectriques ou des séquences de couches (22a, 22b, 22c),
**caractérisé en ce que**
- au moins le premier module de couche (M1) contient au moins une couche (23) à base d'un oxyde conducteur transparent.

2. Dispositif de projection selon la revendication 1, dans lequel la couche (23) à base d'un oxyde conducteur transparent contient de l'oxyde d'indium-étain (ITO), de l'oxyde mixte d'indium-zinc (IZO), de l'oxyde d'étain dopé au fluor (SnO₂:F), de l'oxyde de zinc dopé à l'aluminium (ZnO:Al), de l'oxyde de zinc dopé au gallium (ZnO:Ga), de l'oxyde d'étain dopé à l'antimoine (ATO, SnO₂:Sb) et/ou de l'oxyde de titane dopé au niobium (TiO₂:Nb).

3. Dispositif de projection selon la revendication 2, dans lequel la couche (23) à base d'un oxyde conducteur transparent contient de l'oxyde d'indium-étain (ITO) et est déposée par dépôt physique en phase vapeur avec une teneur en oxygène comprise entre 0 % et 5 % en fraction volumique, de préférence avec une teneur en oxygène inférieure à 1 % en fraction volumique dans le gaz de traitement.

4. Dispositif de projection selon l'une des revendications 1 à 3, dans lequel la couche réfléchissante (20) directement adjacente à la couche (23) à base d'un oxyde conducteur transparent comprend au moins une couche barrière diélectrique (25) qui empêche la diffusion de l'oxygène.

5. Dispositif de projection selon l'une des revendications 1 à 4, dans lequel le premier module de couches (M1) comprend des couches diélectriques ou des séquences de couches (22a, 22b, 22c) et une couche (23) à base d'un oxyde conducteur transparent, et le deuxième module de couches (M2) comprend des couches diélectriques ou des séquences de couches (22a, 22b, 22c) et aucune couche (23) à base d'un oxyde conducteur transparent.

6. Dispositif de projection selon l'une des revendications 1 à 5, dans lequel au moins le premier module de couches (M1) comprend des couches diélectriques ou des séquences de couches (22a, 22b, 22c) et une couche (23) à base d'un oxyde conducteur transparent, et la couche (23) à base d'un oxyde conducteur transparent est la couche du premier module de couches (M1) la plus proche du projecteur HUD (4).

7. Dispositif de projection selon l'une des revendications 1 à 6, dans lequel la couche réfléchissante (20) est disposée sur la surface faisant face à la couche intermédiaire (3) (II, III) de la vitre extérieure (1) ou de la vitre intérieure (2), ou à l'intérieur de la couche intermédiaire (3).

8. Dispositif de projection selon l'une des revendications 1 à 7, dans lequel une couche de blocage (24) d'une épaisseur inférieure à 1 nm est disposée entre la couche électriquement conductrice (21) et le module de couche adjacent (M1, M2).

9. Dispositif de projection selon l'une des revendications 1 à 8, dans lequel l'épaisseur de la couche électriquement conductrice (21) est d'au moins 12 nm et d'au plus 25 nm.

10. Dispositif de projection selon l'une des revendications 1 à 9, dans lequel l'épaisseur de la au moins une couche (23) à base d'oxyde conducteur transparent est comprise entre 20 nm et 150 nm, de préférence entre 60 nm et 100 nm.

11. Dispositif de projection selon l'une des revendications 1 à 10, dans lequel l'épaisseur optique des couches diélectriques ou des séquences de couches (22a, 22b, 22c) est comprise entre 30 nm et 150 nm.

12. Dispositif de projection selon l'une des revendications 1 à 11, dans lequel les couches diélectriques ou séquences de couches (22a, 22b, 22c) comprennent une ou plusieurs des couches suivantes:
une couche antireflet (22a) présentant un indice de réfraction d'au moins 1,9, de préférence à base de nitrure de silicium,
une couche d'augmentation de l'indice de réfraction (22c) présentant un indice de réfraction d'au moins 2,1, de préférence à base d'un nitrure mixte de silicium et d'un métal, en particulier d'un nitrure mixte de silicium et de zirconium, d'un nitrure mixte de silicium et de titane ou d'un nitrure mixte de silicium et d'hafnium,
une couche d'adaptation (22b), de préférence à base d'oxyde de zinc.

13. Dispositif de projection selon l'une des revendications 1 à 12, dans lequel la vitre composite (10) comportant la couche réfléchissante (20) présente une réflexion lumineuse intégrée par rapport au rayonnement polarisé p d'au moins 15 %, mesurée avec une source lumineuse polarisée p de type A à un angle d'incidence de 65° et un angle de vision de 65° par rapport à la normale à la surface (IV) opposée à la couche intermédiaire (3) de la vitre intérieure (2).

14. Dispositif de projection selon l'une des revendications 1 à 13, dans lequel la vitre extérieure (1) est teintée ou colorée et présente une transmittance lumineuse d'au moins 80 %.

15. Utilisation d'un dispositif de projection selon l'une des revendications 1 à 14 en tant qu'affichage tête haute (HUD) dans un véhicule terrestre, aquatique ou aérien, de préférence un véhicule à moteur, un véhicule ferroviaire, un aéronef ou un navire, en particulier une voiture particulière ou un camion.
